# EUROPÄISCHE PATENTSCHRIFT

(11) **EP 2 122 281 B1**
(45) Veröffentlichungstag und Bekanntmachung des Hinweises auf die Patenterteilung: **11.01.2017**
(21) Anmeldenummer: 08716441.4
(22) Anmeldetag: 11.03.2008
(51) Int. Cl.: C01B 3/50, F25J 3/02

(54) **VERFAHREN UND VORRICHTUNG ZUR GEWINNUNG VON GASPRODUKTEN UND FLÜSSIGEM METHAN AUS SYNTHESEGAS**
METHOD AND DEVICE FOR OBTAINING GASEOUS PRODUCTS AND LIQUID METHANE FROM SYNTHESIS GAS
PROCÉDÉ ET DISPOSITIF D'EXTRACTION DE PRODUITS GAZEUX ET DE MÉTHANE LIQUIDE À PARTIR DE GAZ DE SYNTHÈSE

(30) Priorität: 20.03.2007 DE 102007013325
(43) Veröffentlichungstag der Anmeldung: 25.11.2009
(73) Patentinhaber: Linde AG, 80331 München (DE)
(72) Erfinder: LANG, Martin, 80689 München (DE)
(86) Internationale Anmeldenummer: PCT/EP2008/001934
(87) Internationale Veröffentlichungsnummer: WO 2008/113494

(56) Entgegenhaltungen:
- EP-A1- 0 465 366
- EP-A2- 0 583 981
- EP-A2- 0 949 469
- DE-A1- 2 030 740

## Beschreibung

Die Erfindung betrifft ein Verfahren zur gleichzeitigen Erzeugung zumindest eines Gasproduktes sowie eines zum überwiegenden Teil aus flüssigem Methan (CH₄) bestehenden Produktes (Flüssigmethan) aus einem im Wesentlichen aus Wasserstoff (H₂), Kohlenmonoxid (CO) und Methan (CH₄) bestehenden Einsatz, wobei der Einsatz in einer Einrichtung zur Durchführung einer kryogenen Gaszerlegung in mehrere Fraktionen aufgetrennt wird.

Weiterhin betrifft die Erfindung eine Vorrichtung zur Durchführung des erfindungsgemäßen Verfahrens.

Durch unterschiedliche Gaserzeugungsmethoden wird aus kohlenstoffhaltigen Ausgangsstoffen sog. Synthesegas erzeugt, das zum größten Teil aus H₂ und CO besteht, aber auch Methan (CH₄), Wasser (H₂O) und Kohlendioxid (CO₂) enthält. Aus dem Synthesegas werden durch Reinigung und Zerlegung vor allem CO, H₂ bzw. H2/CO-Gemische als Produkte gewonnen, die in der Industrie in vielfältiger Weise Verwendung finden. Die anfallende Restgasfraktion, die üblicherweise auch das CH₄ enthält, wird üblicherweise als Brenngas genutzt oder in den Einsatz zurückgeführt.

Bei einigen Vergasungsverfahren, wie z.B. der Festbettvergasung von Kohle, kommt es zu einem sehr hohen CH₄-Gehalt im Synthesegas. Um die Wirtschaftlichkeit der Synthesegasanlage insgesamt zu erhöhen, wird angestrebt, die erzeugte Methanfraktion als Nebenprodukt ebenfalls einer wirtschaftlichen Nutzung zuzuführen. Läge eine reine Methanfraktion in flüssiger Form vor, bestünde die Möglichkeit, es in Tankwagen oder Schiffe zu verladen und als Methanprodukt zu einem weiter entfernten Abnehmer zu transportieren.

Aufgabe der vorliegenden Erfindung ist es daher, eine Verfahren sowie eine Vorrichtung zur Durchführung des Verfahrens anzugeben, die es erlauben, aus einem Methan enthaltenden Synthesegas neben den Gasprodukten auf kostengünstige Weise auch ein flüssiges Methanprodukt zu erzeugen.

Verfahrensseitig wird die gestellte Aufgabe erfindungsgemäß dadurch gelöst, dass eine Produktreinheit aufweisende Methanfraktion flüssig aus der kryogenen Gaszerlegung abgezogen und, vorzugsweise nach Unterkühlung, als Flüssigmethan in einem Tank zwischengespeichert wird, und dass die kryogene Gaszerlegung die Verfahrensschritte Gaswäsche mit flüssigem CO und CO/CH₄-Trennung umfasst, wobei die CO/CH₄-Trennung in einer CO/CH₄-Trennkolonne durchgeführt wird.

Weitere Ausgestaltungen des erfindungsgemäßen Verfahrens sehen vor, dass
■ die flüssige, Produktreinheit aufweisende Methanfraktion aus dem Sumpf der CO/CH₄-Trennkolonne abgezogen wird.
■ der Kältebedarfs des kryogenen Gaszerlegers durch einen, vorzugsweise 2-stufigen, Expansionsturbine/Verdichter-Prozess (Expander/Booster-Prozess) gedeckt wird, wobei als Kreislaufmedium vorzugsweise Stickstoff und/oder CO verwendet wird.
■ der Kältebedarf des kryogenen Gaszerlegers durch einen Gemischkältekreislauf gedeckt wird, in welchem ein aus wenigstens zwei Komponenten bestehendes Kältemittel geführt wird, wobei es sich bei den Komponenten des Kältemittels um Stickstoff (N₂) und/oder Methan (CH₄) und/oder Ethen (C₂H₄) und/oder Ethan (C₂H₆) und/oder Propen (C₃H₆) und/oder Propan (C₃H₈) und/oder Butan (C₄H₁₀) und/oder Pentan (C₅H₁₂) handelt.
■ die CO/CH₄-Trennkolonne mit einem Reboiler beheizt wird, wobei die Energie zur Beheizung der CO/CH₄-Trennkolonne dem Einsatz entzogen wird.
■ der Einsatz zur kryogenen Gaszerlegung einen Methangehalt von mindestens 10 mol% aufweist.
■ Methanolsynthesegas und/oder Oxogas und/oder Kohlenmonoxid als Gasprodukte erzeugt werden.

Die Erfindung betrifft ferner eine Vorrichtung zur gleichzeitigen Erzeugung zumindest eines Gasproduktes sowie eines zum überwiegenden Teil aus flüssigem Methan (CH₄) bestehenden Produktes (Flüssigmethan) aus einem im Wesentlichen aus Wasserstoff (H₂), Kohlenmonoxid (CO) und Methan (CH₄) bestehenden Einsatz, umfassend ein Einrichtung zur kryogenen Gaszerlegung (kryogener Gaszerleger), in welcher der Einsatz zerlegbar ist.

Die gestellte Aufgabe wird vorrichtungsseitig erfindungsgemäß dadurch gelöst, dass eine Produktreinheit aufweisende Methanfraktion flüssig aus dem kryogenen Gaszerleger abziehbar und, vorzugsweise nach Unterkühlung, als Flüssigmethan zur Zwischenspeicherung in einen Tank überführbar ist, und dass der kryogene Gaszerleger eine Waschkolonne zur Durchführung einer Gaswäsche mit flüssigem CO sowie eine CO/CH₄-Trennkolonne umfasst.

Die erfindungsgemäße Vorrichtung weiterbildend, wird vorgeschlagen, dass
▪ die flüssige, Produktreinheit aufweisende Methanfraktion aus dem Sumpf der CO/CH₄-Trennkolonne abziehbar ist.
▪ sie zur Deckung der Kältebedarfs des kryogenen Gaszerlegers zumindest eine mit einem Verdichter (Booster) gekoppelte Expansionsturbine (Expander) umfasst, über welche ein vorzugsweise aus Stickstoff und/oder CO bestehender Kreislaufstrom kälteleistend entspannbar ist, wobei jeder Booster zumindest einen Teil des Kreislaufstromes verdichtet.
▪ sie eine Einrichtung zur Deckung der Kältebedarfs des kryogenen Gaszerlegers umfasst, in der ein wenigstens aus zwei Komponenten bestehendes Kältemittel in einem Kühlkreislauf führbar ist, wobei es sich bei den Komponenten des Kältemittels um Stickstoff (N₂) und/oder Methan (CH₄) und/oder Ethen (C₂H₄) und/oder Ethan (C₂H₆) und/oder Propen (C₃H₆) und/oder Propan (C₃H₈) und/oder Butan (C₄H₁₀) und/oder Pentan (C₅H₁₂) handelt.
▪ die CO/CH₄-Trennkolonne einen Reboiler umfasst, über den die CO/CH₄-Trennkolonne beheizbar ist, wobei die Energie zur Beheizung dem Einsatz entziehbar ist.

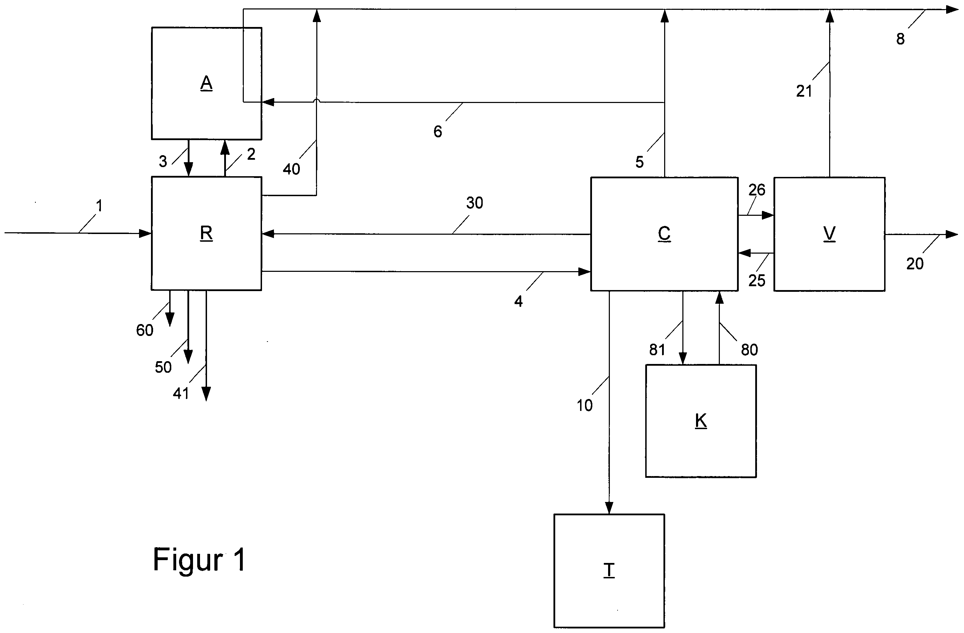

Im Folgenden soll die Erfindung anhand der in den **Figuren 1** bis **4** schematisch dargestellten Ausführungsbeispiele näher erläutert werden.

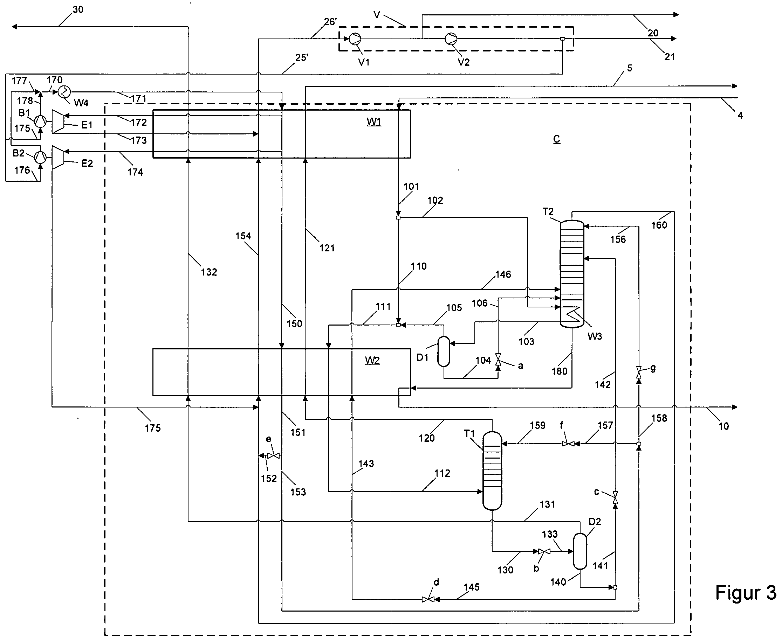

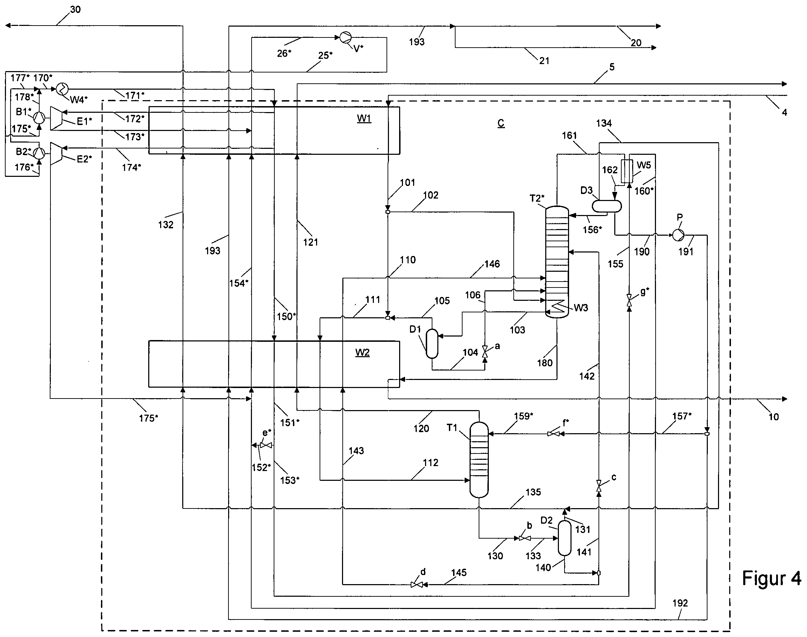

In den **Figuren 3** und **4** werden die in den beiden ersten Aufführungsbeispielen erwähnten kryogenen Gaszerlegungseinheiten zusammen mit den Einrichtungen zur Kälteversorgung genauer beschrieben.

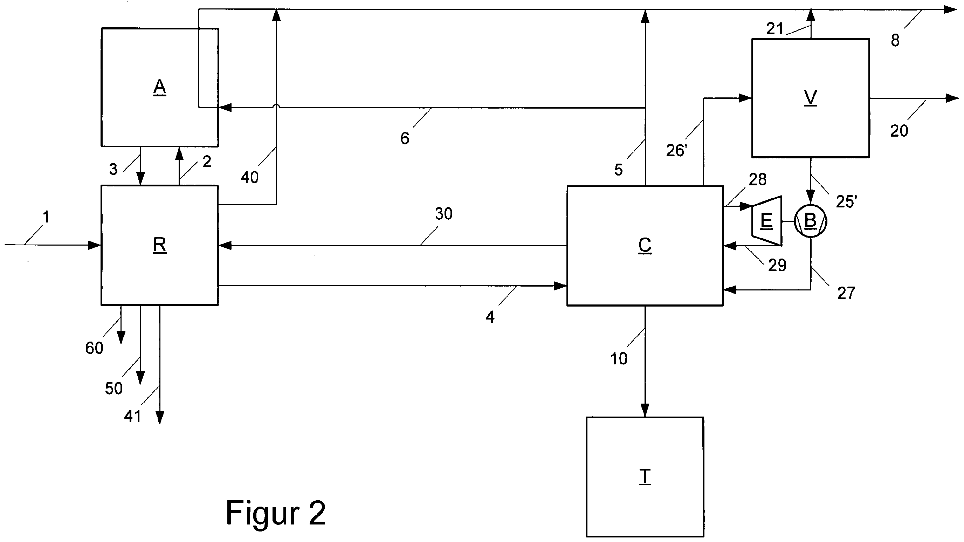

In den **Figuren 1** und **2** werden Ausschnitte aus Synthesegasanlagen zur Produktion von Methanolsynthesegas, Kohlenmonoxid und flüssigem Methan (Flüssig-CH₄) gezeigt. Als Einsatz wird jeweils ein im Wesentlichen aus Wasserstoff (H₂), Kohlenmonoxid (CO), Methan (CH₄) und Kohlendioxid (CO₂) bestehendes Syntheserohgas aus einer Festbett-Kohlevergasung verwendet.

Ein vorzugsweise durch die Vergasung von Kohle erzeugtes Synthesegas 1, wird einer physikalischen Gaswäsche mit tiefkaltem Methanol (Methanolwäsche) R zugeführt, um schwere Kohlenwasserstoffe, CO₂, Schwefelverbindungen und andere Spurenkomponenten zu entfernen. Das gereinigte Synthesegas 2 wird in die Adsorberstation A geleitet und dort von verbliebenen Verunreinigungen (Spuren von CO₂, Methanol und Wasser) adsorptiv befreit. Aus der Adsorberstation A wird das nun weitgehend von unerwünschten Stoffen gereinigte Synthesegas 3 abgezogen, zur Anwärmung gegen abzukühlende Verfahrensströme in die Methanolwäsche R zurückgeführt und schließlich über Leitung 4 dem kryogenen Gaszerleger C als Einsatz zugeführt. Die aus dem Synthesegas 1 abgetrennten Stoffe werden als CO₂-Produkt 41, Sauergas-Fraktion 50 und Restgas 60 aus der Methanolwäsche R abgezogen.

Im kryogenen Gaszerleger C wird der Einsatz 4 in ein aus Wasserstoff und Kohlenmonoxid bestehendes Gasgemisch 5, eine Produktreinheit aufwesende Flüssig-CH₄-Fraktion 10 und einen H₂-reichen Recyclestrom 30, der über einen innerhalb der Methanolwäsche R angeordneten Recycleverdichter (nicht dargestellt) in das Synthesegas zurückgeführt wird, um die Ausbeute zu erhöhen, zerlegt. Der kryogene Gaszerleger C ist mit einem Verdichter V zur Verdichtung des Kreislaufstroms 26 verbunden, der gleichzeitig als Produktverdichter für das CO Produkt 20 und den CO-reichen Teilstrom 21, der in das Methanolsynthesegas 8 eingespeist wird, dient. Der verdichtete Kreislaufstrom 25 wird in den kryogenen Gaszerleger C zurückgeführt, wo er zur Erzeugung von Kälte eingesetzt wird. Das Gasgemisch 5, von dem ein Teil 6 zur als Regeneriergas für die Adsorberstation A abgezweigt wird, bildet zusammen mit der CO₂-Fraktion 40 und dem CO-reichen Strom 21 das Methanolsynthesegas 8, das als Produkt zur Anlagengrenze geführt wird. Die Flüssig-CH₄-Fraktion 10 wird als Produkt aus dem kryogenen Gaszerleger C abgezogen und zur Zwischenspeicherung in den Tank T geleitet.

Zur Deckung seines Kältebedarfs ist der kryogene Gaszerlegers C mit einem Gemischkältekreislauf K verbunden, wie er bei der Erdgasverflüssigung eingesetzt wird, und dem Fachmann hinlänglich bekannt ist. Über Leitung 80 wird ein Kältegemisch angewärmt aus dem kryogenen Gaszerleger C abgezogen, im Gemischkältekreislauf K abgekühlt und anschließend wieder in den kryogenen Gaszerleger C zurückgeleitet.

Das in Figur 2 dargestellte Ausführungsbeispiel unterscheidet sich von dem in Figur 1 dargestellten durch die Art der Kälteerzeugung zur Deckung des Kältebedarfs des kryogenen Gaszerlegers C. Produktreinheit aufweisendes Kohlenmonoxid 25' wird aus dem Verdichter V1 abgezweigt, im Booster V3 weiter verdichtet, anschließend als Gasstrom 27 in den kryogenen Gaszerleger C und über Leitung 28 weiter in die Entspannungsturbine E geleitet. In der direkt mit den Booster B gekoppelten Entspannungsturbine E wird der Gasstrom 28 kälteleistend entspannt, über Leitung 29 in die kryogene Gaszerlegung C zurückgeführt und dort gegen abzukühlende Verfahrenströme angewärmt, bevor er schließlich über Leitung 26'zum Kreislaufverdichter V zugeführt wird.

In den **Figuren 3** und **4** wird der in dem zu Figur 2 gehörigen Ausführungsbeispiel beschriebe kryogene Gaszerleger C zusammen einem 2-stufigen Expander/Booster-Konzept zur Kälteversorgung näher erläutert.

In **Figur 3** wird der Einsatz 4 im Wärmetauscher W1, gegen anzuwärmende Ströme abgekühlt und über Leitung 101 weitergeführt. Ein Teil 102 des abgekühlten Synthesegases 101 wird zur Beheizung des Reboilers W3 der CO/CH₄-Trennkolonne T2 genutzt. Der zweiphasige Austrittsstrom 103 aus dem Reboiler W3 wird im Abscheider D1 in eine Flüssig- und eine Gasphase getrennt. Die kohlenwasserstoffreiche Flüssigphase 104 wird aus dem Abscheider D1 abgezogen, über das Drosselorgan a entspannt und über Leitung 106 direkt in die CO/CH₄-Trennkolonne T2 eingespeist. Die Gasphase 105 aus dem Abscheider D1 wird mit dem zweiten Teil 110 des Synthesegases 101 zum Stoffstrom 111 gemischt, im Wärmetauscher W2 durch Abkühlung teilweise kondensiert und über Leitung 112 in den Sumpfraum der CO-Waschkolonne T1 eingespeist. In der CO-Waschkolonne T1 wird die aufsteigende, H₂-reiche Gasphase mit flüssigem, unterkühltem Kohlenmonoxid 159 gewaschen, um den CH₄-Gehalt in der Kopffraktion 120 zu reduzieren. Die Kopffraktion 120 wird im Wärmetauscher W2 und anschließend im Wärmetauscher W1, dem sie über Leitung 121 zugeführt wird, angewärmt und anschließend über Leitung 5 aus dem kryogenen Gaszerleger C heraus und in das Methanolsynthesegas geführt, dessen Hauptbestandteil sie bildet. Die Sumpffraktion 130 aus der CO-Waschkolonne T1 wird über das Drosselorgan b entspannt und über Leitung 133 in den Abscheider D2 eingeleitet, um einen Teil des in ihm enthaltenen Wasserstoffs zu entfernen. Die H₂-reiche Gasphase 131 aus dem Abscheider D2 wird im Wärmetauscher W2 und anschließend im Wärmetauscher W1, dem sie über Leitung 132 zugeführt wird, angewärmt und anschließend als Recyclegas 30 in die nicht dargestellte Methanolwäsche zurückgeführt. Die Flüssigphase 140 aus dem Abscheider D2 wird geteilt. Ein Teil 141 wird über das Drosselorgan c entspannt und über Leitung 142 direkt in den oberen Teil der CO/CH₄-Trennkolonne T2 eingespeist. Der zweite Teil 145 wird über das Drosselorgan d entspannt, im Wärmetauscher W2, dem er über Leitung 143 zugeleitet wird, verdampft und angewärmt und über Leitung 146 in den unteren Teil der CO/CH₄-Trennkolonne T2 als Zwischenheizung eingespeist. Im Sumpf der CO/CH₄-Trennkolonne T2 fällt flüssiges Methan mit Produktqualität an, das über Leitung 180 weiter geführt wird. Als Kopfprodukt wird eine CO-Fraktion 160, mit geringem CH₄-Gehalt, abgezogen, die vor allem durch den Flüssig-CO-Rücklauf 156 erzeugt wird. Das Flüssig-CH₄ 180 wird im Wärmetauscher W2 unterkühlt und über Leitung 10 zur Zwischenspeicherung in einen nicht dargestellten Tank außerhalb des kryogenen Gaszerlegers C geführt.

Der Verdichter V, der in diesem Ausführungsbeispiel mit zwei Verdichtersektionen V1 und V2 ausgeführt ist, dient sowohl als Produktverdichter für das CO-Produkt 20 und die CO-Einspeisung 21 in das Methanolsynthesegas, als auch als Kreislaufverdichter für die Erzeugung von Kälte zur Deckung des Kältebedarfs des kryogenen Gaszerlegers C. Der Kreislaufstrom 25' wird an der Druckseite der zweiten Verdichtersektion V2 abgezweigte und in die beiden Teilströme175 und 176 aufgeteilt, die anschließend parallel in den beiden, mit den Expansionsturbinen (Expandern) E1 und E2 gekoppelten Boostern B1 und B2 weiter verdichtet werden. Die verdichteten Gasströme 177 und 178 werden zum Gasstrom 170 vereinigt, im Wärmetauscher W4 gegen Kühlwasser abgekühlt und über Leitung 171 dem Wärmetauscher W1 zugeführt. Innerhalb des Wärmetauschers W1 werden aus dem CO-Strom 171 die beiden Teilströme 172 und 174 abgetrennt und über Seitenabzüge als Einsatzströme den beiden Expandern E1 und E2 zugeführt, wo sie kälteleistend entspannt werden. Der verbleibende CO-Strom wird im Wärmetaucher W1 weiter abgekühlt, über Leitung 150 dem Wärmetauscher W2 zugeführt, dort noch weiter abgekühlt, kondensiert und unterkühlt und über Leitung 151 weiter geführt. Ein Teil 152 wird aus dem unterkühlten CO-Strom 151 abgezweigt und, über das Drosselorgan e, in den Wärmetauscher W2 zurückgeführt, wo er die Spitzenkälte liefert. Der verbleibende CO-Strom 153 wird in die beiden Teilströme 157 und 158 aufgeteilt, die, nach Entspannung über die Drosselorgane f und g, für die beiden Kolonnen T1 und T2 als Rücklauf 156 bzw. 159 dienen.

Das CO-Produktreinheit aufweisende Kopfprodukt 160 aus der CO/CH₄-Trennkolonne T2 wird mit dem Austrittsstrom 175 des kalten Expanders E2 und dem flüssigen CO-Strom 152 gemischt, im Wärmetauscher W2 verdampft, angewärmt und über Leitung 154 in den Wärmetausche W1 weiter geleitet. Im Wärmetauscher W1 wird aus dem Stoffstrom 154 durch Zuspeisung des Austrittsstroms 173 des warmen Expanders E1 und Anwärmung der CO-Strom 26' erzeugt, der dem Verdichter V auf der Saugseite aufgegeben wird.

Das in **Figur 4** dargestellte Ausführungsbeispiel unterscheidet sich von dem in **Figur 3** dargestellten vor allem durch die Art der Kälteversorgung für den kryogenen Gaszerleger C, die hier anstatt über einen CO-Kreislauf über einen Stickstoffkreislauf erfolgt. Um zu verhindern, dass Stickstoff in Produktreinheit aufweisende CO-Ströme gelangt, ist die CO/CH₄-Trennkolonne T2* mit einem Kondensator W5, der mit flüssigem Stickstoff gekühlt wird, ausgestattet.

Der Einsatz 4 wird im Wärmetauscher W1, gegen anzuwärmende Ströme abgekühlt und über Leitung 101 weitergeführt. Ein Teil 102 des abgekühlten Synthesegases 101 wird zur Beheizung des Reboilers W3 der CO/CH₄-Trennkolonne T2 genutzt. Der zweiphasige Austrittsstrom 103 aus dem Reboiler W3 wird im Abscheider D1 in eine Flüssig- und eine Gasphase getrennt. Die kohlenwasserstoffreiche Flüssigphase 104 wird aus dem Abscheider D1 abgezogen, über das Drosselorgan a entspannt und über Leitung 106 direkt in die CO/CH₄-Trennkolonne T2* eingespeist. Die Gasphase 105 aus dem Abscheider D1 wird mit dem zweiten Teil 110 des Synthesegases 101 zum Stoffstrom 111 gemischt, im Wärmetauscher W2 durch Abkühlung teilweise kondensiert und über Leitung 112 in den Sumpfraum der CO-Waschkolonne T1 eingespeist. In der CO-Waschkolonne T1 wird die aufsteigende, H₂-reiche Gasphase mit flüssigem, unterkühltem Kohlenmonoxid 159* gewaschen, um den CH₄-Gehalt in der Kopffraktion 120 zu reduzieren. Die Kopffraktion 120 wird im Wärmetauscher W2 und anschließend im Wärmetauscher W1, dem sie über Leitung 121 zugeführt wird, angewärmt und anschließend über Leitung 5 in das Methanolsynthesegas geführt, dessen Hauptbestandteil sie bildet. Die Sumpffraktion 130 aus der CO-Waschkolonne T1 wird über das Drosselorgan b entspannt und über Leitung 133 in den Abscheider D2 eingeleitet, um einen Teil des in ihm enthaltenen Wasserstoffs zu entfernen. Die H₂-reiche Gasphase 131 aus dem Abscheider D2 wird mit der Gasfraktion 134 aus dem Abscheider D3 zum Stoffstrom 135 vereinigt, der im Wärmetauscher W2 und anschließend im Wärmetauscher W1, dem er über Leitung 132 zugeführt wird, angewärmt und anschließend als Recyclegas 30 in die nicht dargestellte Methanolwäsche zurückgeführt. Die Flüssigphase 140 aus dem Abscheider D2 wird geteilt. Ein Teil 141 wird über das Drosselorgan c entspannt und über Leitung 142 direkt in den oberen Teil der CO/CH₄-Trennkolonne T2* eingespeist. Der zweite Teil 145 wird über das Drosselorgan d entspannt, im Wärmetauscher W2, dem er über Leitung 143 zugeleitet wird, verdampft und angewärmt und über Leitung 146 in den unteren Teil der CO/CH₄-Trennkolonne T2* als Zwischenheizung eingespeist. Im Sumpf der CO/CH₄-Trennkolonne T2* fällt flüssiges Methan mit Produktqualität an, das über Leitung 180 abgezogen und, nach Unterkühlung im Wärmetauscher W2, über Leitung 10 zur Zwischenspeicherung in einen nicht dargestellten Tank außerhalb des kryogenen Gaszerlegers C geführt wird.

Als Kopfprodukt wird eine CO-reiche Fraktion 161 mit geringem CH₄-Gehalt aus der CO/CH₄-Trennkolonne T2* abgezogen. Aus der gasförmigen CO-reichen Fraktion 161 wird im Kondensator W5 durch Abkühlung gegen kalten Stickstoff 155 das zweiphasige Stoffgemisch 162 erzeugt, das im Abscheider D3 in die wasserstoffreiche Gasphase 134 sowie die CO-Produktreinheit aufweisenden Flüssigphasen 156* und 190 getrennt wird. Die Flüssigphase 156* wird als Rücklauf zum Kopf der CO/CH₄-Trennkolonne T2* zurückgeführt, während die Flüssigphase 190 der Pumpe P aufgegeben wird. Aus der Pumpe P tritt die Flüssigphase 191 mit einem Druck aus, der ausreichend hoch ist, um einerseits einen Teil 157* abzuzweigen und das Drosselorgan f* als Rücklauf 159* für die CO-Waschkolonne T1 zu führen. Andererseits reicht der Druck der Flüssigphase 191 aber auch dazu aus, um den Teilstrom 192 im Wärmetauscher W2 zu verdampfen und dort sowie im Wärmetauscher W1, dem er über Leitung 193 zugeführt wird, anzuwärmen, über Leitung 194 aus dem kryogenen Gaszerleger C zu leiten und als CO-Produkt 20 sowie als Einspeisung 21 ins Methanolsynthesegas weiter zu führen.

Der Verdichter V* dient als Kreislaufverdichter für das Kälte-Erzeugungssystem, in dem Kälte zur Deckung des Kältebedarfs des kryogenen Gaszerlegers C erzeugt wird. Der im Verdichter V* durch Verdichtung von Stickstoff 26* erzeugte Kreislaufstrom 25* wird in die beiden Teilströme175* und 176* aufgeteilt, die anschließend parallel in den beiden, mit den Expandern E1* und E2* gekoppelten Boostern B1* und B2* weiter verdichtet werden. Die verdichteten Gasströme 177* und 178* werden zum Gasstrom 170* vereinigt, im Wärmetauscher W4* gegen Kühlwasser abgekühlt und über Leitung 171* dem Wärmetauschers W1 zugeführt. Innerhalb des Wärmetauschers W1 werden aus dem Stickstoffstrom 171* die beiden Teilströme 172* und 174* abgetrennt und über Seitenabzüge als Einsatzströme den beiden Expandern E1* und E2* zugeführt, wo sie kälteleistend entspannt werden. Der verbleibende Stickstoffstrom wird im Wärmetaucher W1 weiter abgekühlt, über Leitung 150* dem Wärmetauscher W2 zugeführt, dort noch weiter abgekühlt, kondensiert und unterkühlt und über Leitung 151* weiter geleitet. Ein Teil 152* wird aus dem unterkühlten Stickstoffstrom 151* abgezweigt und über das Drosselorgan e* in den Wärmetauscher W2 zurückgeführt, wo er die Spitzenkälte liefert. Der verbleibende Stickstoffstrom 153* wird über das Drosselorgan g* entspannt und über Leitung 155 dem Kondensator W5 zugeführt, wo es gegen die Kopffraktion 161 aus CO/CH₄-Trennkolonne T2* angewärmt wird.

Der angewärmt aus dem Kondensator W5 abgezogene Stickstoffstrom 160* wird mit dem Austrittsstrom 175* des kalten Expanders E2* und dem flüssigen Stickstoffstrom 152* gemischt, im Wärmetauscher W2 verdampft, angewärmt und über Leitung 154* in den Wärmetausche W1 weiter geleitet. Im Wärmetauscher W1 wird aus dem Stoffstrom 154* durch Zuspeisung des Austrittsstroms 173* des warmen Expanders E1* und Anwärmung der Gesamtstrom 26* erzeugt, der dem Verdichter V* auf der Saugseite aufgegeben wird.

## Patentansprüche

1. Verfahren zur gleichzeitigen Erzeugung zumindest eines Gasproduktes (8, 20) sowie eines zum überwiegenden Teil aus flüssigem Methan (CH₄) bestehenden Produktes (10) aus einem im Wesentlichen aus Wasserstoff, Kohlenmonoxid (CO) und Methan bestehenden Einsatz (4), wobei der Einsatz in einer Einrichtung zur Durchführung einer kryogenen Gaszerlegung (C) in mehrere Fraktionen aufgetrennt wird, **dadurch gekennzeichnet, dass** die kryogene Gaszerlegung die Verfahrensschritte Gaswäsche mit flüssigem CO (T1) und CO/CH₄-Trennung umfasst und dass die CO/CH₄-Trennung in einer CO/CH₄-Trennkolonne (T2, T2*) durchgeführt wird, wobei eine Produktreinheit aufweisende Methanfraktion (10) flüssig aus der kryogenen Gaszerlegung (C) abgezogen und, vorzugsweise nach Unterkühlung, als Flüssigmethan in einem Tank (T) zwischengespeichert wird.

2. Verfahren nach Anspruch 1, **dadurch gekennzeichnet, dass** die flüssige, Produktreinheit aufweisende Methanfraktion (180) aus dem Sumpf der CO/CH₄-Trennkolonne (T2, T2*) abgezogen wird.

3. Verfahren nach einem der Ansprüche 1 oder 2, **dadurch gekennzeichnet, dass** der Kältebedarf des kryogenen Gaszerlegers (C) durch einen vorzugsweise 2-stufigen, Expansionsturbinen/Verdichter-Prozess (E1, B1, E2, B2, E1*, B1*, E2*, B2*) gedeckt wird, wobei als Kreislaufmedium (25', 25*) vorzugsweise Stickstoff und/oder CO verwendet wird.

4. Verfahren nach einem der Ansprüche 1 bis 3, **dadurch gekennzeichnet, dass** der Kältebedarf des kryogenen Gaszerlegers (C) durch einen Gemischkältekreislauf (K) gedeckt wird, in welchem ein aus wenigstens zwei Komponenten bestehendes Kältemittel (80, 81) geführt wird, wobei es sich bei den Komponenten des Kältemittels (80, 81) um Stickstoff und/oder Methan und/oder Ethen und/oder Ethan und/oder Propen und/oder Propan und/oder Butan und/oder Pentan handelt.

5. Verfahren nach einem der Ansprüche 1 bis 4, **dadurch gekennzeichnet, dass** die CO/CH₄-Trennkolonne (T2, T2*) mit einem Reboiler (W3) beheizt wird, wobei die Energie zur Beheizung der CO/CH₄-Trennkolonne (T2, T2*) dem Einsatz (4, 102) entzogen wird.

6. Verfahren nach einem der Ansprüche 1 bis 5, **dadurch gekennzeichnet, dass** der Einsatz zur kryogenen Gaszerlegung (4) einen Methangehalt von mindestens 10 mol% aufweist.

7. Verfahren nach einem der Ansprüche 1 bis 6, **dadurch gekennzeichnet, dass** Methanolsynthesegas und/oder Oxogas und/oder Kohlenmonoxid als Gasprodukte erzeugt werden.

8. Vorrichtung zur gleichzeitigen Erzeugung zumindest eines Gasproduktes (8, 20) sowie eines zum überwiegenden Teil aus flüssigem Methan (CH₄) bestehenden Produktes (10) aus einem im Wesentlichen aus Wasserstoff, Kohlenmonoxid (CO) und Methan bestehenden Einsatz (4), umfassend einen kryogenen Gaszerleger (C) in welchem der Einsatz (4) zerlegbar ist, **dadurch gekennzeichnet, dass** der Gaszerlegers eine Waschkolonne zur Durchführung einer Gaswäsche mit flüssigem CO (T1) sowie eine CO/CH₄-Trennkolonne (T2, T2*) aufweist, wobei der kryogene Gaszerleger (C) derart mit einem Tank (T) verbunden ist, dass eine Produktreinheit aufweisende Methanfraktion flüssig aus dem kryogenen Gaszerleger (C) abziehbar und, vorzugsweise nach Unterkühlung, als Flüssigmethan (10) zur Zwischenspeicherung in den Tank (T) überführbar ist.

9. Vorrichtung nach Anspruch 8, **dadurch gekennzeichnet, dass** die flüssige, Produktreinheit aufweisende Methanfraktion (180) aus dem Sumpf der CO/CH₄-Trennkolonne (T2, T2*) abziehbar ist.

10. Vorrichtung nach einem der Ansprüche 8 oder 9, **dadurch gekennzeichnet, dass** sie zur Deckung der Kältebedarfs des kryogenen Gaszerlegers (C) zumindest eine mit einem Verdichter (B1, B2, B1*, B2*) gekoppelte Expansionsturbine (E1, E1*, E2, E2*) umfasst, über welche ein vorzugsweise aus Stickstoff und/oder CO bestehender Kreislaufstrom kälteleistend entspannbar ist, wobei jeder Verdichter (B1, B2, B1*, B2*) zumindest einen Teil des Kreislaufstromes verdichtet.

11. Vorrichtung nach einem der Ansprüche 8 bis 10, **dadurch gekennzeichnet, dass** sie eine Einrichtung zur Deckung des Kältebedarfs des kryogenen Gaszerlegers (C) umfasst, in der ein wenigstens aus zwei Komponenten bestehendes Kältemittel (80, 81) in einem Kühlkreislauf (K) führbar ist, wobei es sich bei den Komponenten des Kältemittels um Stickstoff und/oder Methan und/oder Ethen und/oder Ethan und/oder Propen und/oder Propan und/oder Butan und/oder Pentan handelt.

12. Vorrichtung nach einem der Ansprüche 8 bis 11, **dadurch gekennzeichnet, dass** die CO/CH₄-Trennkolonne (T2, T2*) einen Reboiler (W3) umfasst, über den die CO/CH₄-Trennkolonne (T2, T2*) beheizbar ist, wobei die Energie zur Beheizung dem Einsatz (4, 102) entziehbar ist.

## Claims

1. Method for the simultaneous generation of at least one gas product (8, 20) and also a product (10) predominantly consisting of liquid methane (CH₄) from a feed (4) essentially consisting of hydrogen, carbon monoxide (CO) and methane, wherein the feed is separated into a plurality of fractions in a unit for carrying out a cryogenic gas fractionation (C), **characterized in that** the cryogenic gas fractionation comprises the method steps of gas scrubbing with liquid CO (T1) and CO/CH4 separation and **in that** the CO/CH4 separation is carried out in a CO/CH4 separation column (T2, T2*), wherein a methane fraction (10) having product purity is taken off from the cryogenic gas fractionation (C) in the liquid form and, preferably after subcooling, is temporarily stored as liquid methane in a tank (T).

2. Method according to Claim 1, **characterized in that** the liquid methane fraction (180) having product purity is taken off from the bottom of the CO/CH₄ separation column (T2, T2*).

3. Method according to either of Claims 1 and 2, **characterized in that** the cold requirement of the cryogenic gas fractionator (C) is covered by a, preferably 2-stage, expansion turbine/compressor process (E1, B1, E2, B2, E1*, B1*, E2*, B2*), wherein the circulation medium (25', 25*) preferably used is nitrogen and/or CO.

4. Method according to one of Claims 1 to 3, **characterized in that** the cold requirement of the cryogenic gas fractionator (C) is covered by a mixed refrigerant cycle (K) in which a refrigerant (80, 81) consisting of at least two components is conducted, wherein the components of the refrigerant (80, 81) are nitrogen and/or methane and/or ethene and/or ethane and/or propene and/or propane and/or butane and/or pentane.

5. Method according to one of Claims 1 to 4, **characterized in that** the CO/CH₄ separation column (T2, T2*) is heated by a reboiler (W3), wherein the energy for heating the CO/CH₄ separation column (T2, T2*) is taken from the feed (4, 102).

6. Method according to one of Claims 1 to 5, **characterized in that** the feed for the cryogenic gas fractionation (4) has a methane content of at least 10 mol%.

7. Method according to one of Claims 1 to 6, **characterized in that** methanol synthesis gas and/or oxo gas and/or carbon monoxide are generated as gas products.

8. Device for the simultaneous generation of at least one gas product (8, 20) and also of a product (10) predominantly consisting of liquid methane (CH₄) from a feed (4) essentially consisting of hydrogen, carbon monoxide (CO) and methane, comprising a cryogenic gas fractionator (C) in which the feed (4) is fractionable, **characterized in that** the gas fractionator comprises a scrubbing column for carrying out a gas scrubbing with liquid CO (T1) and also a CO/CH4 separation column (T2, T2*), wherein the cryogenic gas fractionator (C) is connected to a tank (T) in such a way that a methane fraction having product purity can be taken off in the liquid form from the cryogenic gas fractionator (C) and, preferably after subcooling, is transferable to the tank (T) as liquid methane (10) for temporary storage.

9. Device according to Claim 8, **characterized in that** the liquid methane fraction (180) having product purity can be taken off from the bottom of the CO/CH₄ separation column (T2, T2*).

10. Device according to either of Claims 8 and 9, **characterized in that** it comprises at least one expansion turbine (E1, E1*, E2, E2*) coupled to a compressor (B1, B2, B1*, B2*) for coverage of the cold requirement of the cryogenic gas fractionator (C), via which expansion turbine a cycle stream preferably consisting of nitrogen and/or CO is expandable to produce cold, wherein each compressor (B1, B2, B1*, B2*) compresses at least a part of the cycle stream.

11. Device according to either of Claims 8 to 10, **characterized in that** it comprises a unit for covering the cold requirement of the cryogenic gas fractionator (C), in which unit a refrigerant (80, 81) consisting of at least two components is conductable in a cooling circuit (K), wherein the components of the refrigerant are nitrogen and/or methane and/or ethene and/or ethane and/or propene and/or propane and/or butane and/or pentane.

12. Device according to one of Claims 8 to 11, **characterized in that** the CO/CH₄ separation column (T2, T2*) comprises a reboiler (W3), via which the CO/CH₄ separation column (T2, T2*) is heatable, wherein the energy for the heating can be taken off from the feed (4, 102).

## Revendications

1. Procédé de génération simultanée d'au moins un produit gazeux (8, 20), ainsi que d'un produit (10) constitué en majeure partie de méthane liquide (CH₄), à partir d'une entrée (4) essentiellement constituée d'hydrogène, de monoxyde de carbone (CO) et de méthane, l'entrée étant séparée en plusieurs fractions dans un dispositif pour la réalisation d'une décomposition de gaz cryogénique (C), **caractérisé en ce que** la décomposition de gaz cryogénique comprend les étapes de procédé d'épuration de gaz avec du CO liquide (T1) et de séparation CO/CH₄, et **en ce que** la séparation CO/CH₄ est réalisée dans une colonne de séparation CO/CH₄ (T2, T2*), une fraction de méthane présentant une pureté de produit (10) étant soutirée sous forme liquide de la décomposition de gaz cryogénique (C), et stockée, de préférence après sous-refroidissement, en tant que méthane liquide dans un réservoir (T).

2. Procédé selon la revendication 1, **caractérisé en ce que** la fraction de méthane liquide présentant une pureté de produit (180) est soutirée du fond de la colonne de séparation CO/CH₄ (T2, T2*).

3. Procédé selon l'une quelconque des revendications 1 ou 2, **caractérisé en ce que** la demande frigorifique du décomposeur de gaz cryogénique (C) est couverte par un procédé à turbines d'expansion/compresseurs (E1, B1, E2, B2, E1*, B1*, E2*, B2*), de préférence à 2 étapes, de l'azote et/ou du CO étant de préférence utilisés en tant que milieu de circulation (25', 25*).

4. Procédé selon l'une quelconque des revendications 1 à 3, **caractérisé en ce que** la demande frigorifique du décomposeur de gaz cryogénique (C) est couverte par un circuit frigorifique mixte (K), dans lequel un réfrigérant constitué d'au moins deux composants (80, 81) est introduit, les composants du réfrigérant (80, 81) étant l'azote et/ou le méthane et/ou l'éthène et/ou l'éthane et/ou le propène et/ou le propane et/ou le butane et/ou le pentane.

5. Procédé selon l'une quelconque des revendications 1 à 4, **caractérisé en ce que** la colonne de séparation CO/CH₄ (T2, T2*) est chauffée avec un rebouilleur (W3), l'énergie pour le chauffage de la colonne de séparation CO/CH₄ (T2, T2*) étant soutirée de l'entrée (4, 102).

6. Procédé selon l'une quelconque des revendications 1 à 5, **caractérisé en ce que** l'entrée pour la décomposition de gaz cryogénique (4) présente une teneur en méthane d'au moins 10 % en moles.

7. Procédé selon l'une quelconque des revendications 1 à 6, **caractérisé en ce qu'**un gaz de synthèse de méthanol et/ou un oxogaz et/ou du monoxyde de carbone sont générés en tant que produits gazeux.

8. Dispositif pour la génération simultanée d'au moins un produit gazeux (8, 20), ainsi que d'un produit (10) constitué en majeure partie de méthane liquide (CH₄) à partir d'une entrée (4) essentiellement constituée d'hydrogène, de monoxyde de carbone (CO) et de méthane, comprenant une décomposeur de gaz cryogénique (C) dans lequel l'entrée (4) peut être décomposé, **caractérisé en ce que** le décomposeur de gaz comprend une colonne de lavage pour la réalisation d'une épuration de gaz avec du CO liquide (T1), ainsi qu'une colonne de séparation CO/CH₄ (T2, T2*), le décomposeur de gaz cryogénique (C) étant raccordé avec un réservoir (T) de sorte qu'une fraction de méthane présentant une pureté de produit puisse être soutirée sous forme liquide du décomposeur de gaz cryogénique (C) et transférée, de préférence après sous-refroidissement, en tant que méthane liquide (10) pour être stockée dans le réservoir (T).

9. Dispositif selon la revendication 8, **caractérisé en ce que** la fraction de méthane liquide présentant une pureté de produit (180) peut être soutirée du fond de la colonne de séparation CO/CH₄ (T2, T2*).

10. Dispositif selon l'une quelconque des revendications 8 ou 9, **caractérisé en ce qu'**il comprend pour couvrir la demande frigorifique du décomposeur de gaz cryogénique (C) au moins une turbine d'expansion (E1, E1*, E2, E2*) couplée avec un compresseur (B1, B2, B1*, B2*), avec laquelle un courant de circulation de préférence constitué d'azote et/ou de CO peut être détendu en générant une puissance frigorifique, chaque compresseur (B1, B2, B1*, B2*) compressant au moins une partie du courant de circulation.

11. Dispositif selon l'une quelconque des revendications 8 à 10, **caractérisé en ce qu'**il comprend un dispositif pour couvrir la demande frigorifique du décomposeur de gaz cryogénique (C), dans lequel un réfrigérant (80, 81) constitué d'au moins deux composants peut être introduit dans un circuit de refroidissement (K), les composants du réfrigérant étant l'azote et/ou le méthane et/ou l'éthène et/ou l'éthane et/ou le propène et/ou le propane et/ou le butane et/ou le pentane.

12. Dispositif selon l'une quelconque des revendications 8 à 11, **caractérisé en ce que** la colonne de séparation CO/CH₄ (T2, T2*) comprend un rebouilleur (W3), avec lequel la colonne de séparation CO/CH₄ (T2, T2*) peut être chauffée, l'énergie pour le chauffage pouvant être soutirée de l'entrée (4, 102).
